# EUROPEAN PATENT APPLICATION

(11) **EP 3 100 807 A1**
(43) Date of publication of application: **07.12.2016**
(21) Application number: 16172284.8
(22) Date of filing: 31.05.2016
(51) Int. Cl.: B23B 41/04, B23D 11/00, B23D 13/00, B23Q 5/04, B23Q 27/00, F16D 1/08

(54) **BROACH**

(30) Priority: 04.06.2015 IT UB20150928
(71) Applicant: M.T. S.R.L., 47842 San Giovanni in Marignano (RN) (IT)
(72) Inventor: MARCHETTI, Gianluca, 47842 San Giovanni in Marignano (RN) (IT)
(74) Representative: Pandolfi, Paolo

(57) **Abstract**

A broach (1) that is mountable on a tool-holding turret of a numerically controlled lathe for carrying out chip removal machinings on a workpiece (P), comprises: a supporting body (2) that is fixable to the tool-holding turret; at least a first tool-holding shaft (8) and a second tool-holding shaft (9) that are rotatably supported by the supporting body (2) for supporting respectively a first broaching tool (10) and a second broaching tool (11); and driving means that is rotatably supported by the supporting body (2) and removably connectable to a drive of the tool-holding turret for rotating the first tool-holding shaft (8) and the second tool-holding shaft (9) at an adjustable rotation speed (α).

## Description

The invention relates to a broach that is mountable on a tool-holding turret of a numerically controlled lathe for carrying out chip removal machinings on a workpiece.

Broaching is a chip removal machining that enables holes to be shaped that are previously made in a workpiece, to make, for example, grooved, lined, squared, hexagonal, serrated, star-shaped, and similar holes. Broaching is further used to shape external profiles of a workpiece for making, for example, polygonal, elliptic, serrated and similar profiles.

Broaches are known comprising a base, a tool-holding table, a spindle and a broaching tool, known as a broach. The tool-holding table is stiffly connected to the base and is intended for retaining the workpiece during broaching. The spindle is movable, horizontally or vertically, towards and away from the tool-holding table by a hydraulic drive, and comprises grasping grippers for grasping the broach. The broach, which can machine by pulling or compressing, is shaped for making internal or external shapes by removing chips. In particular, the broach consists of a plurality of teeth arranged one after another along a broaching axis. Each tooth has a radial dimension, i.e. measured perpendicularly to the broaching axis, which is greater than the preceding one. Broaching is carried out, in one or more passes, by moving the broach linearly along the broaching axis.

Known broaches have numerous drawbacks.

A first drawback is that they are not much flexible. This is because they are not able to machine blind holes, but only through holes.

A further drawback is that they are particularly costly. In fact, they require a significant outlay of money to be purchased.

Another drawback is that they are very bulky.

Another further drawback is that have low productivity. This is due to the manner, i.e. the linear movement of the broach, with which they perform broaching.

Lastly, if, before and after broaching, other chip removal machinings have to be performed on the workpiece, it is necessary to remove the workpiece from the lathe, position the workpiece on the broach to perform broaching, remove the broached workpiece from the broach, and reposition the workpiece on the lathe. It is completely clear that such operations are extremely slow and risk compromising the precision of the machining tasks.

In order to overcome some of the aforesaid drawbacks, tools have been devised that are mountable on a tool-holding turret of a numerically controlled lathe.

An example of such tools is disclosed in patent CH451647. The tool disclosed in CH451647 comprises a sleeve, which is fixable, for example, to a tool-holding turret of a numerically controlled lathe. This tool further comprises a tool-holding shaft that is freely rotatable, on bearings, inside the sleeve. The tool-holding shaft is arranged tilted by a certain machining angle with respect to a longitudinal axis of symmetry of the sleeve such that a broaching tool, fitted to a free end of the tool-holding shaft, can advance, with a pendulum rotating movement in a through or blind hole that has been previously made in the workpiece. More precisely, in use, this tool is fixed to the tool-holding turret, whilst the workpiece is rotated by the spindle of the numerically controlled lathe. The broaching tool, facing the workpiece, is then advanced by the tool-holding turret towards the workpiece. The latter, as mentioned above, is drilled beforehand with a circular hole of a diameter corresponding to that of a circle inscribed in the shape of the hole to be made, such that the broaching tool, rotated by the workpiece, works tangentially in the circular hole and progressively on each side of the shape of the hole being made when the tool-holding turret is advanced and deepens the cut step-by-step as far as the preset depth.

A drawback of the tool disclosed in CH451647 is that it has reduced productivity. This is due to the fact that the broaching tool has to be resharpened and replaced fairly frequently also following slight wear of the broaching tool. In fact, following slight wear of the broaching tool, the broaching tool is no longer able to remain perfectly anchored to the rotating workpiece, i.e. remains behind compared with the rotating workpiece, by a few tenths of a degree. This produces, along a broaching axis, a rotation, i.e. a loss of straightness, of the shaped section during work, and thus the rejection of the workpiece.

Another drawback of the tool disclosed in CH451647 is that it does not enable workpieces to be shaped that are made of a highly resistant material and/or to make shapes that require major removal of material. In fact, in such cases, the load that would be generated on the broaching tool would be so high as to cause the breakage thereof.

The object of the present invention is to provide a broach that is free of the drawbacks disclosed above.

According to the present invention a broach is provided according to what is claimed in the attached claims.

The invention can be better understood and implemented with reference to the attached drawings that illustrate an embodiment thereof by way of non-limiting example, in which:
Figure 1 is an axonometric view of a broach according to the invention;
Figure 2 is a longitudinal section of the broach of Figure 1;
Figure 3 is a cross section of the broach of Figure 1;
Figure 4 is a further longitudinal section of the broach of Figure 1;
Figure 5 is an enlarged detail of Figure 4;
Figure 6 is an axonometric view of a key included in the broach of Figure 1;
Figure 7 is a frontal view of the key of Figure 6;
Figure 8 is an enlarged detail of Figure 2; and
Figure 9 is an axonometric view of a workpiece machined by the broach according to the invention.

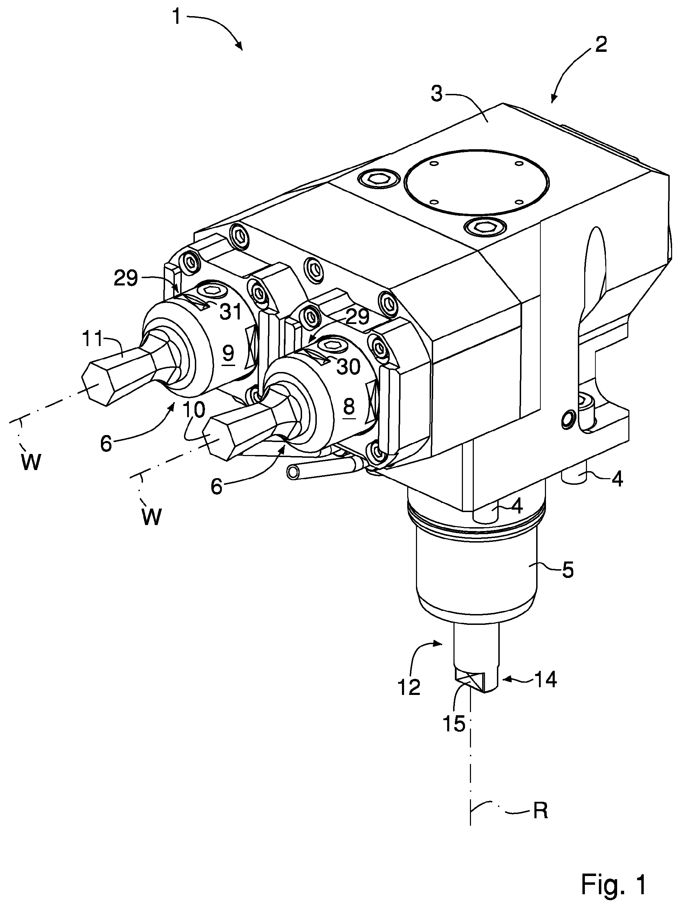

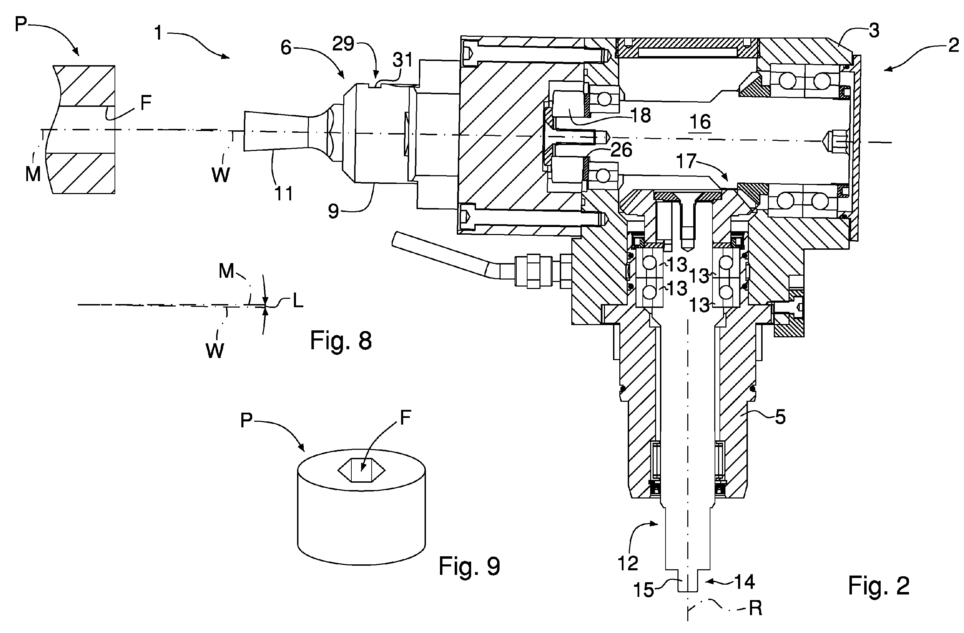

With reference to Figure 1, a broach 1 is shown that is mountable on a tool-holding turret, which is not shown, of a numerically controlled lathe, which is not shown, for carrying out chip removal machinings on a workpiece P (Figure 9), for example for making a hexagonal hole F in the (previously drilled) workpiece P.

The broach 1 comprises a supporting body 2.

The supporting body 2, which is substantially box-shaped, comprises a prismatic portion 3 that is fixable, for example by screws 4, to the tool-holding turret, and an elongated portion 5, or sleeve, fixed to the prismatic portion 3.

In one embodiment of the invention that is not shown, the prismatic portion 3 and the elongated portion 5 are a single body.

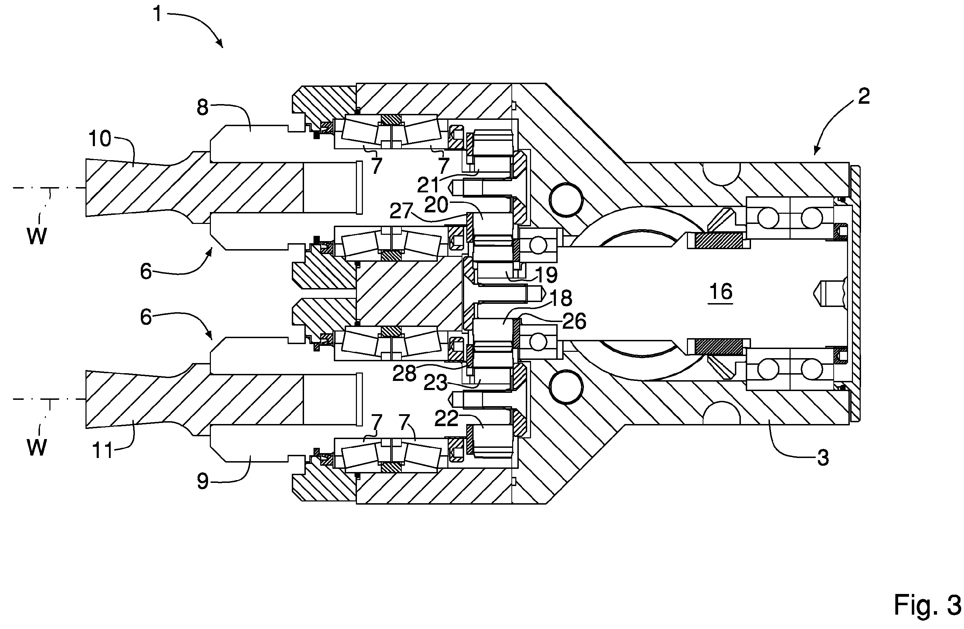

The broach 1 further comprises tool-holding shaft means 6 rotatably supported, by first bearings 7, for example tapered roller bearings, by the prismatic portion 3 of the supporting body 2 (Figure 3).

The tool-holding shaft means 6 extends along, and is rotatable around, a work axis W.

Also, the tool-holding shaft means 6 comprises at least one first tool-holding shaft 8 and a second tool-holding shaft 9 arranged for respectively supporting a first broaching tool 10 and a second broaching tool 11, configured, in the shown embodiment, to make the hexagonal hole F in the workpiece P.

In one embodiment of the invention that is not shown, the tool-holding shaft means 6 comprises three, or four, or more than four, tool-holding shafts, each of the tool-holding shafts being arranged for supporting a respective broaching tool.

The broach 1 further includes driving means rotatably supported by the supporting body 2 and removably connectable to a drive, which is not shown, of the tool-holding turret for rotating the tool-holding shaft means 6, i.e. the first tool-holding shaft 8 and the second tool-holding shaft 9, at an adjustable rotation speed.

More precisely, the driving means drives, as disclosed below, the first tool-holding shaft 8 and the second tool-holding shaft 9 at the same rotation speed α, this rotation speed α being adjustable so as to equal a rotation speed ß of a spindle, which is not shown, of the aforesaid lathe, arranged for supporting the workpiece P during machining.

In particular the workpiece P is rotatable around a rotation axis M. In use, the work axis W of the tool-holding shaft means 6 is incident, i.e. not parallel, to the rotation axis M of the workpiece P. More precisely, in use, between the work axis W of the tool-holding shaft means 6 and the rotation axis M of the workpiece P a machining angle L, other than 0°, is defined, in particular equal to about 1° (Figure 8).

The aforesaid driving means comprises a drive shaft 12, rotatably supported by second bearings 13, by the elongated portion 5 of the supporting body 2 (Figure 2).

The drive shaft 12, or drive shaft, extends along, and is rotatable around, a rotation axis R, and comprises an end portion 14 defining a male element 15, or connection, arranged for engaging removably with a corresponding female element, or drive, which is not shown, of a rotating drive shaft of the tool-holding turret.

In use, when the male element 15 engages with the female element, the drive shaft 12 is rotated by the drive shaft rotating around the rotation axis R. The adjustable rotation speed of the drive shaft 12, and consequently the rotation speed α of the tool-holding shaft means 6, is adjustable by a management and control system included in the numerically controlled lathe.

The aforesaid rotation axis R of the drive shaft 12 forms, with the work axis W of the tool-holding shaft means 6, an angle other than 90°, in particular of about 91°.

It should be noted how in the broach 1, illustrated in Figure 1, the first tool-holding shaft 8 and the second tool-holding shaft 9 are arranged alongside in a plane transverse to a plane of symmetry of the drive shaft 12.

In one embodiment of the invention that is not shown, the first tool-holding shaft 8 and the second tool-holding shaft 9 are arranged alongside in a plane parallel to or coincident with, the plane of symmetry of the drive shaft 12.

The aforesaid driving means further comprises a driven shaft 16 connected to, and rotatable by, the drive shaft 12, between the latter and the driven shaft 16 there being interposed a pair of gear wheels 17 meshing with one another, one of which is fitted to the drive shaft 12, and the other is fitted to the driven shaft 16 (Figure 2).

The driving means further comprises a driven gear wheel 18 fitted, by a first key 19, to the driven shaft 16 and rotatable by the latter (Figure 3).

Also, the driving means comprises, with reference to Figure 3, a first driven gear wheel 20 fitted, by a second key 21, to the first tool-holding shaft 8 and rotatable by the driven gear wheel 18, and a second driven gear wheel 22 fitted, by a third key 23, to the second tool-holding shaft 9 and rotatable by the driven gear wheel 18.

The driven gear wheel 18, the first driven gear wheel 20 and the second driven gear wheel 22 are straight or helical gear wheels.

The broach 1 further comprises adjusting means, housed in the prismatic portion 3 of the supporting body 2, to adjust a reciprocal angular position, i.e. timing, between the first tool-holding shaft 8 and the second tool-holding shaft 9.

In the embodiment illustrated in the attached Figures, the adjusting means comprises the first key 19, the second key 21 and the third key 23.

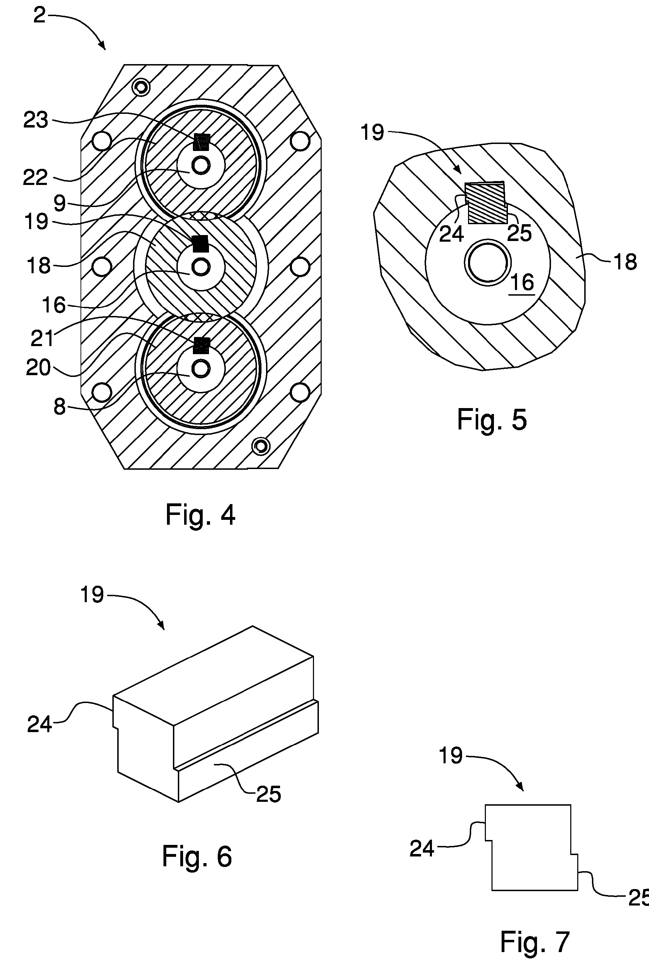

With reference to Figures 5 to 7, the first key 19 is disclosed. The first key 19 comprises a first portion 24 which is insertable into a hollow, which is not shown, obtained in the driven gear wheel 18, and a second portion 25 which is insertable into a hollow, which is not shown, obtained in the driven shaft 16.

The first portion 24 and the second portion 25 of the first key 19 are angularly staggered with respect to one another such as to adjust, according to how much they have been angularly staggered by, a reciprocal angular position between the driven shaft 16 and the driven gear wheel 18.

Similarly, the second key 21, which is not shown in detail, comprises a first portion 24 which is insertable into a hollow, which is not shown, obtained in the first driven gear wheel 20, and a second portion 25 which is insertable into a hollow, which is not shown, obtained in the first tool-holding shaft 8.

The first portion 24 and the second portion 25 of the second key 21 are angularly staggered with respect to one another such as to adjust, according to how much they have been angularly staggered by, a reciprocal angular position between the first tool-holding shaft 8 and the first driven gear wheel 20.

Also the third key 23, which is not shown in detail, comprises a first portion 24 which is insertable into a hollow, which is not shown, obtained in the second driven gear wheel 22, and a second portion 25 which is insertable into a hollow, which is not shown, obtained in the second tool-holding shaft 9.

The first portion 24 and the second portion 25 of the third key 23 are angularly staggered with respect to one another such as to adjust, according to how much they have been angularly staggered by, a reciprocal angular position between the second tool-holding shaft 9 and the second driven gear wheel 22.

The broach 1 further comprises a first spacer 26, a second spacer 27 and a third spacer 28 (Figure 3).

More precisely, the first spacer 26 acts between the driven shaft 16 and the driven gear wheel 18, the second spacer 27 acts between the first tool-holding shaft 8 and the first driven gear wheel 20, and the third spacer 28 acts between the second tool-holding shaft 9 and the second driven gear wheel 22.

In one embodiment of the invention that is not shown, the driven gear wheel 18, the first driven gear wheel 20 and the second driven gear wheel 22 are helical gear wheels, and the adjusting means comprises the aforesaid first spacer 26, second spacer 27, and third spacer 28. Depending on the thicknesses of these spacers it is in fact possible to vary a reciprocal axial position between the driven gear wheel 18, the first driven gear wheel 20 and the second driven gear wheel 22, such as to adjust a reciprocal angular position between the first tool-holding shaft 8 and the second tool-holding shaft 9. In this embodiment of the invention, the first key 19, the second key 21 and the third key 23 can be of the type disclosed above or can be normal straight keys.

In another embodiment of the invention, which is not shown, the adjusting means comprises conical coupling means for connecting the driven shaft 16 to the driven gear wheel 18, and/or the first tool-holding shaft 8 to the first driven gear wheel 20, and/or the second tool-holding shaft 9 to the second driven gear wheel 22, such as to adjust an angular reciprocal position between the elements connected by the conical coupling means.

Such conical coupling means comprises a conical portion of the driven shaft 16 and a corresponding conical portion of the driven gear wheel 18, a conical portion of the first tool-holding shaft 8 and a corresponding conical portion of the first driven gear wheel 20, and a conical portion of the second tool-holding shaft 9 and a corresponding conical portion of the second driven gear wheel 22. These conical portions enable the reciprocal angular position between the elements connected thereby to be adjusted.

Alternatively, the conical coupling means comprises one or more pairs of rings, each ring comprising a conical coupling surface that is arranged for coupling with a corresponding conical coupling surface of another ring. These rings can be interposed between the driven shaft 16 and the driven gear wheel 18, and/or between the first tool-holding shaft 8 and the first driven gear wheel 20, and/or between the second tool-holding shaft 9 and the second driven gear wheel 22. These conical coupling surfaces enable the reciprocal angular position between the elements connected thereby to be adjusted.

It should be noted that if the adjusting means comprises the aforesaid conical coupling means, the first key 19, the second key 21 and the third key 23 can be of the type disclosed above, or can be normal straight keys, and the aforesaid spacers 26, 27, 28 can have different thicknesses, or the same thickness.

The broach 1 further comprises reference means 29 positioned on the first tool-holding shaft 8 and on the second tool-holding shaft 9 to check a reciprocal angular position between the first tool-holding shaft 8 and the second tool-holding shaft 9.

The reference means 29 comprises, for example, a first flat reference surface 30, obtained on the first tool-holding shaft 8 at a clamping element of the first broaching tool 10, and a second reference surface 31, which is also flat, obtained on the second tool-holding shaft 9 at a clamping element of the second broaching tool 11.

In one embodiment of the invention that is not shown, the adjusting means is not present.

The latter, in fact, is necessary only if, via the reference means 29, the first tool-holding shaft 8 and second tool-holding shaft 9 do not have the same angular position with respect to the supporting body 2, i.e. are not in phase with one another. This could be due, for example, to the tolerances present between the elements constituting the kinematic chain.

If the adjusting means is not present, the keys 19, 21, 23 are normal straight keys, the spacers 26, 27, 28 have the same thickness, and no conical coupling means is present.

It should be noted that it is possible to compensate a timing error by using one or more of the keys 19, 21, 23 disclosed above (in this case the remaining keys will be straight keys), and/or one or more of the spacers 26, 27, 28 disclosed above, and/or one or more of the aforesaid conical coupling means.

Also, it should be noted that the simultaneous presence of the three keys 19, 21, 23, and/or of the three spacers 26, 27, 28 with different thicknesses, and/or of the conical coupling means, enables the timing error to be compensated on the three keys 19, 21, 23 and/or on the three spacers 26, 27, 28 and/or on the conical coupling means.

It should be noted that timing, if necessary, between the first tool-holding shaft 8 and the second tool-holding shaft 9 is carried out just once, by the manufacturer of the broach 1 with one or more of the systems disclosed above. Timing does not therefore have to be performed by the user of the numerically controlled lathe.

Also, it should be noted that the first broaching tool 10 and the second broaching tool 11 of a same set of broaching tools are mounted on the respective tool-holding shafts 8, 9, such that the respective (and possible subsequent) sharpenings are in phase with one another.

In use, the broach 1 is mounted on the tool-holding turret. Subsequently, the numerically controlled lathe rotates, at a preset rotation speed ß, the spindle supporting the workpiece P.

Substantially simultaneously, the driving means, by the drive of the tool-holding turret, rotates the tool-holding shafts 8, 9 such that the rotation speed α thereof is the same as the rotation speed ß of the spindle. Also subsequently, the tool-holding turret advances the broach 1 towards the workpiece P such that a first broaching tool performs, by a pendulum rotating movement, a first machining on the workpiece P.

Subsequently, if necessary, the tool-holding turret disengages the first broaching tool from the workpiece, and positions the broach 1 such that, advancing, a second broaching tool, in phase with the first broaching tool, performs a second machining on the workpiece P, and so on.

The broach 1 according to the invention has numerous advantages.

Above all, the broach 1 according to the invention enables even materials with great resistance to be machined and/or machining with major chip removal to be performed. In fact, the presence of two or more tool-holding shafts, in phase with one another, enables the load necessary for performing the machining to be distributed over several broaching tools (positioned and sharpened in phase with one another), for example on a roughing broaching tool and on a finishing broaching tool.

Further, the broach 1 according to the invention has greater productivity than known broaches. This is due to the driving means that enables the tool-holding shafts to be driven at the same speed as the spindle that supports the workpiece, making a kind of "virtual" mechanical connection between the broaching tool and the workpiece. In this manner, slight wear of the broaching tool does not mean that during the rotation the broaching tool remains behind compared with the rotation of the workpiece P and thus does not automatically entail a rejection of the workpiece, inasmuch as the straightness of the shaped section is maintained during the machining step.

Also, the broach 1 according to the invention enables the life of the broaching tools to be extended. In fact, owing to the presence of at least two tool-holding shafts, it is possible to reuse, once the cutting edge has become worn, a finishing broaching tool as a roughing broaching tool.

Also, the presence of an angle of about 1° between the rotation axis M of the workpiece P and the work axis W of the tool-holding shaft means 6, enables broaching tools to be used that have reduced rake angles and are thus more resistant to mechanical stress during machining.

Lastly, the broach 1 according to the invention is particularly flexible, inasmuch as it enables both through holes and blind holes to be shaped, is of modest cost, and, owing to the combined action of the advancement and rotation motion of the broaching tool, is particularly fast.

## Claims

1. Broach (1) that is mountable on a tool-holding turret of a numerically controlled lathe for carrying out chip removal machinings on a workpiece (P), said broach (1) comprising:
- a supporting body (2) that is fixable to said tool-holding turret;
- tool-holding shaft means (6) that is rotatably supported by said supporting body (2) for supporting a broaching tool (10, 11), said workpiece (P) being rotatable by a spindle of said lathe around a rotation axis (M), said tool-holding shaft means (6) being rotatable around a work axis (W) which forms an angle (L) different than 0° with said rotation axis (M);
- driving means that is rotatably supported by said supporting body (2) and removably connectable to a drive of said tool-holding turret for rotating said tool-holding shaft means (6) at an adjustable rotation speed (α), wherein said tool-holding shaft means (6) comprises at least a first tool-holding shaft (8) and a second tool-holding shaft (9) arranged for supporting respectively a first broaching tool (10) and a second broaching tool (11);
- adjusting means housed within said supporting body (2), for adjusting a mutual angular position between said first tool-holding shaft (8) and said second tool-holding shaft (9);
- reference means (29) positioned on said first tool-holding shaft (8) and on said second tool-holding shaft (9) for checking a mutual angular position between said first tool-holding shaft (8) and said second tool-holding shaft (9).

2. Broach (1) according to claim 1, wherein said driving means comprises a drive shaft (12) that is removably connectable to, and rotatable by, said drive, a driven shaft (16) connected and rotatable by said drive shaft (12), a driven gear wheel (18) connected and rotatable by said driven shaft (16), a first driven gear wheel (20) connected to said first tool-holding shaft (8) and rotatable by said driven gear wheel (18), and a second driven gear wheel (22) connected to said second tool-holding shaft (9) and rotatable by said driven gear wheel (18).

3. Broach (1) according to claim 1, or 2, wherein said adjusting means comprises a key (19) for connecting said driven shaft (16) to said driven gear wheel (18), and/or a key (21) for connecting said first tool-holding shaft (8) to said first driven gear wheel (20), and/or a key (23) for connecting said second tool-holding shaft (9) to said second driven gear wheel (22), said key (19, 21, 23) comprising a first portion (24) that is connectable to said driven gear wheel (18), and/or to said first driven gear wheel (20), and/or to said second driven gear wheel (22); said key (19, 21, 23) comprising a second portion (25) that is connectable to said driven shaft (16) and/or to said first tool-holding shaft (8) and/or to said second tool-holding shaft (9) respectively; said first portion (24) and said second portion (25) of said key (19, 21, 23) being mutually angularly staggered so as to adjust a mutual angular position between the elements connected by said key (19, 21, 23).

4. Broach (1) according to any one of the preceding claims, wherein said driven gear wheel (18), said first driven gear wheel (20) and said second driven gear wheel (22) comprise helical toothing; said adjusting means comprising a spacer (26) acting on said driven gear wheel (18), and/or a spacer (27) acting on said first driven gear wheel (20), and/or a spacer (28) acting on said second driven gear wheel (22), to vary a mutual axial position between said driven gear wheel (18), said first driven gear wheel (20) and said second driven gear wheel (22), so as to adjust a mutual angular position between said first tool-holding shaft (8) and said second tool-holding shaft (9).

5. Broach (1) according to any one of the preceding claims, wherein said adjusting means comprises conical coupling means for connecting said driven shaft (16) to said driven gear wheel (18), and/or said first tool-holding shaft (8) to said first driven gear wheel (20), and/or said second tool-holding shaft (9) to said second driven gear wheel (22), so as to adjust a mutual angular position between the elements connected by said conical coupling means.

6. Broach (1) according to any one of the preceding claims, wherein said first tool-holding shaft (8) and said second tool-holding shaft (9) are arranged alongside in a plane that is transverse to a plane of symmetry of said drive shaft (12).

7. Broach (1) according to any one of claims 1 to 5, wherein said first tool-holding shaft (8) and said second tool-holding shaft (9) are arranged alongside in a plane that is parallel to or coincides with a plane of symmetry of said drive shaft (12).

8. Broach (1) according to any one of the preceding claims, wherein said tool-holding shaft means (6) comprises three, or four, or more than four, tool-holding shafts, each of said tool-holding shafts being arranged for supporting a respective broaching tool.

9. Broach (1) according to any one of the preceding claims, wherein said angle (L) is about 1°.

10. Use of a broach (1) according to any one of the preceding claims that is mounted on a tool-holding turret of a numerically controlled lathe for carrying out chip removal machinings on a workpiece (P), said use comprising rotating said tool-holding shaft means (6) by said driving means so that said tool-holding shaft means has a rotation speed (α) that is the same as a rotation speed (ß) of a spindle of said lathe supporting said workpiece.
